(19) Europäisches Patentamt
European Patent Office
Office européen des brevets

(11) Veröffentlichungsnummer: **0 089 488**
**B1**

(12) **EUROPÄISCHE PATENTSCHRIFT**

(45) Veröffentlichungstag der Patentschrift: **25.06.86**

(51) Int. Cl.⁴: **C 09 D 5/44**, C 09 D 3/58, C 25 D 13/06

(21) Anmeldenummer: **83101421.2**

(22) Anmeldetag: **15.02.83**

# (54) Wasserdispergierbare Bindemittel für kationische Elektrotauchlacke und Verfahren zu ihrer Herstellung.

(30) Priorität: **20.03.82 DE 3210306**

(43) Veröffentlichungstag der Anmeldung: **28.09.83 Patentblatt 83/39**

(45) Bekanntmachung des Hinweises auf die Patenterteilung: **25.06.86 Patentblatt 86/26**

(84) Benannte Vertragsstaaten: **AT BE CH DE FR GB IT LI NL SE**

(56) Entgegenhaltungen:
**EP-A-0 043 934**
**DE-A-2 934 467**

(73) Patentinhaber: **BASF Lacke & Farben Aktiengesellschaft, Max-Winkelmann-Strasse 80, D-4400 Münster (DE)**

(72) Erfinder: **Schupp, Eberhard, Dr. Dipl.-Chem., Tilsiterweg 4, D-6830 Schwetzingen (DE)**
Erfinder: **Geist, Michael, Dr. Dipl.-Chem., Rubensstrasse 251, D-4400 Münster (DE)**
Erfinder: **Diefenbach, Horst, Dr. Dipl.-Chem., Am Lerchenhain 8, D-4405 Nottuln (DE)**
Erfinder: **Batzill, Wolfgang, Dr. Dipl.-Chem., Emil-Nolde-Weg 93, D-4400 Münster (DE)**

(74) Vertreter: **Habbel, Hans-Georg, Dipl.-Ing., Postfach 3429 Am Kanonengraben 11, D-4400 Münster (DE)**

**EP 0 089 488 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft wasserdispergierbare Bindemittel für kationische Elektrotauchlacke auf der Basis von Umsetzungsprodukten von modifizierten Epoxydharzen und primären und/oder sekundären Aminen, die ggf. Vernetzungsmittel, Pigmente, Verlaufsmittel und andere übliche Hilfsmittel enthalten.

Kationische wasserdispergierbare Kunstharze als Bindemittel für Elektrotauchlacke sind bekannt. So beschreibt z.B. die DE-A 2 701 002 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

Dieses und andere bekannte Kunstharze für die kathodische Elektrotauchlackierung werden häufig für Grundierungen eingesetzt, d.h. die mit ihnen beschichteten Gegenstände erhalten eine zusätzliche Decklackschicht. Nachteilig können jedoch mit den bisher bekannten Harzen nur Beschichtungen mit relativ geringer Schichtdicke erreicht werden. So werden in der DE-A 2 701 002 erreichbare Schichtdicken von nur 11,4–18 µm angegeben. Wenn an eine Lackierung besonders hohe Anforderungen hinsichtlich der Korrosionsbeständigkeit und der Oberflächengüte gestellt werden, wie es z.B. bei der Lackierung von Kraftwagen und anderen hochwertigen Gütern der Fall ist, ist es daher bisher üblich, zwischen der Elektrotauchgrundierung und dem Decklack als zusätzliche Schicht einen sogenannten Füller aufzubringen. Dies ist aufwendig und kostenintensiv. Daher ist es wünschenswert, das Elektrotauchlackierverfahren so zu verbessern, dass bei diesem Verfahren grössere Schichtdicken erreicht werden können. Wie bereits oben ausgeführt, ist das mit den bisher bekannten kationischen Kunstharzen jedoch nicht möglich. Die Probleme ergeben sich daraus, dass bei einer Erhöhung der Abscheidespannung über die Durchbruchspannung hinaus Oberflächenstörungen im Film durch Aufreissen der Schicht auftreten. Die Verlängerung der Beschichtungszeit ergibt ebenfalls eine Steigerung der Schichtdicke, doch lässt sich diese Steigerung nicht beliebig fortführen, denn es besteht normalerweise aufgrund des elektrischen Widerstandes des abgeschiedenen Films eine obere Grenze der Schichtdicke, bei der auch bei noch so langem Beschichten praktisch kein Schichtstärkenzuwachs mehr erreicht wird.

Gegenstand der vorliegenden Erfindung sind nun wasserdispergierbare Bindemittel der eingangs genannten Art, die bei der Elektrotauchlackierung hohe Schichtdicken ergeben und zu Überzügen führen, die verbesserte Eigenschaften aufweisen. Es wurde gefunden, dass es vorteilhaft ist, das zur Solubilisierung eingesetzte Amin über ein mit einer α,β-olefinisch ungesättigten Amidomethylgruppierung substituiertes Mono- oder Diphenol an das Bindemittelmolekül anzulagern.

Gegenstand der Erfindung sind daher Bindemittel der eingangs genannten Art, die dadurch gekennzeichnet sind, dass als Umsetzungsprodukte solche enthalten sind, die hergestellt worden sind durch Umsetzung von

(A) niedermolekularen, aromatische Gruppen enthaltenden Epoxidharzen mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart, dass die Umsetzungsprodukte einen Anteil an aromatischen Gruppen, berechnet als Phenylengruppe, von 10–45% enthalten, und weitere Umsetzung der Reaktionsprodukte von A und B mit

(C) gegebenenfalls bis zu 60 Gew.-%, bezogen auf das gesamte Bindemittel, polyfunktionellen Alkoholen, Carbonsäuren und/oder SH-Verbindungen mit einem Molekulargewicht von 300–5000, wobei die Molverhältnisse von (A), (B) und ggf. (C) so gewählt worden sind, dass das erhaltene Zwischenprodukt endständige Epoxidgruppen aufweist,

(D) durch weitere Umsetzung des Zwischenproduktes unter Addition einer phenolischen Hydroxylgruppe eines Mono- und/oder Diphenols an die Epoxidgruppen, wobei das Mono- oder Diphenol als Substituenten an dem oder den aromatischen Ringen mindestens eine Gruppierung der allgemeinen Formel

$$-CH_2-NH-\overset{O}{\overset{||}{C}}-CR^1=CHR^2 \qquad (I)$$

trägt, in der $R^1$ und $R^2$ untereinander gleich oder verschieden sind und für Wasserstoff oder eine Methylgruppe stehen, mit der Massgabe, dass zumindest an einen Teil der Gruppierungen der Formel (I) primäre und/oder sekundäre Amine addiert sind, wobei die Aminaddition vor oder nach der Umsetzung der phenolischen Hydroxylgruppen mit den Epoxidgruppen durchgeführt worden sein kann.

Aus der DE-A-29 34 467 ist es bekannt, zur Darstellung von polymerem Material, welches die Gruppierung

$$>C=\overset{|}{C}-\underset{\underset{O}{||}}{C}-NH-$$

enthalten soll, hydroxylhaltiges polymeres Material mit N-Alkoxymethylacryl- bzw. -methacrylamiden unter Alkoholabspaltung umzuethern. Diese Umetherung, eine Kondensationsreaktion, wird bei 50–200 °C, bevorzugt bei 80–160 °C, bevorzugt in Gegenwart eines sauren Katalysators durchgeführt.

In einer Michael-Additionsreaktion können primäre und/oder sekundäre Amine an die Doppelbindung der Acrylamidgruppierung addiert werden.

Erfindungsgemäss werden jedoch an das aus den Komponenten (A), (B) und ggf. (C) dargestellte Zwischenprodukt mit endständigen Epoxidgruppen phenolische OH-Gruppen eines Mono- und/oder Diphenols addiert, wobei das Phenol als Substituenten an dem oder an den aromatischen Ringen mindestens eine Gruppierung

$$-CH_2-NH-\overset{\overset{\large O}{||}}{C}-CR^1=CHR^2$$

aufweist. Phenolische OH-Gruppen addieren sehr gut an Epoxidgruppen, diese Additionsreaktion ist daher begünstigt und verläuft in guten Ausbeuten und unter relativ milden Bedingungen. Im Vergleich zur bekannten Umetherungsreaktion verläuft die erfindungsgemässe Additionsreaktion im Temperaturbereich von 90–120 °C unter Katalyse beispielsweise von Dimethylbenzylamin. Die Obergrenze dieses Temperaturbereichs liegt daher deutlich unter der Obergrenze des Temperaturbereichs der Umetherungsreaktion. Diese niedrigere Reaktionstemperatur stellt einen Vorteil dar. Ein weiterer technischer Vorteil liegt darin, dass keine unerwünschten Nebenprodukte, wie z.B. Alkohole, gebildet werden. Bei dem bekannten Verfahren müssen die bei der Umetherung abgespaltenen Alkohole, z.B. n-Butanol oder Ethanol, erst destillativ entfernt werden.

Die erfindungsgemäss durch Addition von phenolischen OH-Gruppen an Epoxidgruppen entstehenden Etherbrücken gewährleisten eine gute Elastizität der Filme. Entsprechend der grossen chemischen Stabilität von Etherbindungen ergibt sich weiterhin eine sehr gute Beständigkeit gegen Lösungsmittel und Chemikalien. Die Additionsprodukte von Phenolen an Oxirane weisen ferner gute Haftung der Lackfilme auf Metallen, grössere Härte, Abriebfestigkeit sowie hohe Schlagfestigkeit auf.

Durch die Anlagerung des Amins an einen Teil der Doppelbindungen der Gruppierung gemäss Formel (I) stehen die restlichen Doppelbindungen für Vernetzungsreaktionen beim Einbrennen der mittels der erfindungsgemässen Bindemittel hergestellten Überzüge zur Verfügung. Durch diese zusätzliche Vernetzung ergeben sich eine verbesserte Oberflächengüte und eine erhöhte Verseifungsbeständigkeit der resultierenden Überzüge gegenüber chemischen und klimatischen Angriffen. Es ergibt sich auch eine erhöhte Badstabilität der mit den erfindungsgemässen Bindemitteln hergestellten wässrigen Lackbäder.

Für die Komponente A – niedermolekulare, aromatische Gruppen enthaltende Epoxidharze mit einem Epoxidäquivalentgewicht unter 375 – sind Polyepoxide geeignet. Als Polyepoxide können bei der vorliegenden Erfindung Materialien verwendet werden, die zwei oder mehr Epoxidgruppen im Molekül enthalten. Bevorzugt sind Verbindungen mit zwei Epoxidgruppen im Molekül. Die Polyepoxide haben ein relativ niedriges Molekulargewicht von höchstens 750, bevorzugt 400–500. Die Polyepoxide können zum Beispiel Polyglycidylether von Polyphenolen sein, wie Bisphenole, vorteilhaft z.B. Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl)- 2,2-propan, 4,4'-Dihydroxybenzophenon, Bis(4-hydroxyphenyl) -1,1-ethan, Bis(4-hydroxyphenyl) -1,1-isobutan, Bis(4-hydroxy-tertiärbutylphenyl) -2,2-propan, Bis(2-hydroxynaphthyl) methan, 1,5-Dihydroxynaphthalin und Hydantoinepoxide.

Eine andere geeignete Klasse von Polyepoxiden sind Polyglycidylether von phenolischen Novolakharzen.

Vorteilhaft können auch Polyglycidylester von aromatischen Polycarbonsäuren verwendet werden.

Als Komponente B werden aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.

Geeignete Verbindungen entsprechen der folgenden allgemeinen Formel:

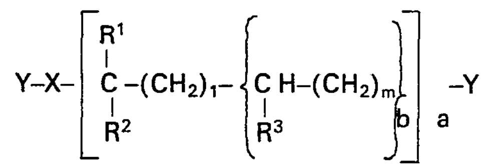

Hierin bedeuten

Y =OH, COOH

$X=(CH_2)_n$

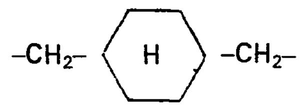

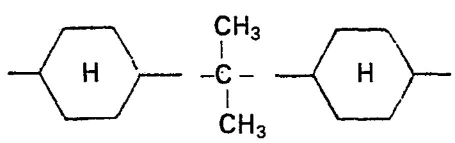

$R^1, R^2, R^3$ = H, Alkylester mit 1 bis 5 C-Atomen

a = 0; 1

b = 0; 1

1 = 0–10

m, n = 1–10

Als Beispiele seien genannt:

Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl- 1,3-propandiol, 2-Methyl-2-ethyl -1,3-propandiol, 2-Methyl-2- propyl-1,3-propandiol, 2-Ethyl-2-butyl- 1,3-propandiol, 1,2-Butandiol, 1,4-Butandiol, 2,3-Butandiol, 2-Ethyl- 1,4-butandiol, 2,2-Diethyl- 1,3-butandiol, Buten-2-diol-1,4, 1,2-Pentandiol, 1,5-Pentandiol, 3-Methyl-1,5-Pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethylhydroxyacetat, 2,2-Dimethyl-3-hydroxypropyl-2,2-dimethylhydroxypropionat, 2-Methyl-2-propyl-3-hydroxypropyl-2-methyl-2-propylhydroxypropionat, 4,4'-Methylenbiscyclohexanol und 4,4'-Isopropylidenbiscyclohexanol. Einige bevorzugte Diole sind 2,2-Dimethyl-1,3-propandiol, 3-Methyl-1,5-pentandiol, 2,2-Dimethyl-3-hydroxypropyl-2,2-dimethylhydroxypropionat und 4,4'-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itakonsäure, Citrakonsäure, Mesakonsäure und Glutakonsäure.

Bevorzugt eingesetzte Dicarbonsäuren sind z.B. 2,2-Dimethylmalonsäure und Hexahydrophthalsäure.

Wesentlich ist es, dass die Verbindungen der Komponente B in einem solchen Verhältnis mit der Komponente A umgesetzt werden, dass das Umsetzungsprodukt den angegebenen Gehalt an aromatischen Gruppen, berechnet als Phenylengruppe, von 10–45% aufweist.

Zur Herstellung des Reaktionsproduktes wird gegebenenfalls noch die Komponente C mitverwendet. Ihr Anteil an dem gesamten Bindemittel beträgt vorteilhafterweise 10–50 Gewichtsprozent.

Die als Komponente C geeigneten polyfunktionellen Alkohole, Carbonsäuren und SH-Verbindungen haben ein Molekulargewicht von 300–5 000, bevorzugt von 530–3 000. Die bei der Erfindung in Betracht kommenden Polyole schliessen Diole, Triole und höhere polymere Polyole wie Polyesterpolyole, Polyätherpolyole ein. Besonders bevorzugt sind Polyesterpolyole und unter ihnen die Polycaprolactonpolyole.

Für die Komponente C geeignete Polyalkylenetherpolyole entsprechen der folgenden Formel:

$$H-\left[-O-(CHR)_n-\right]_m-OH$$

in der R = Wasserstoff oder ein niedriger Alkylrest, gegebenenfalls mit verschiedenen Substituenten, ist, n = 2 bis 6 und m = 10 bis 50 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 500 bis 3 000.

Die Polyesterpolyole können ebenfalls als polymere Polyolkomponente (Komponente C) bei der Erfindung verwendet werden. Man kann die Polyesterpolyole durch Polyveresterung von organischen Polycarbonsäuren oder ihren Anhydriden mit organischen Polyolen herstellen. Üblicherweise sind die Polycarbonsäuren und die Polyole aliphatische oder aromatische Dicarbonsäuren und Diole.

Die zur Herstellung der Polyester verwendeten Diole schliessen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure, Glutarsäure, Hexachlorheptandicarbonsäure und Tetrachlorphthalsäure. Anstelle dieser Säuren können auch ihre Anhydride, soweit diese existieren, verwendet werden.

Ferner lassen sich bei der Erfindung auch Polyesterpolyole, die sich von Lactonen ableiten, als Komponente C benutzen. Diese Produkte erhält man z.B. durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{O}{\parallel}}{C}-(CHR)_n-CH_2O$$

entsprechen, in der n mindestens 4, bevorzugt 4 bis 6, ist und der Substituent Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden:

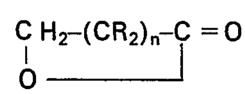

in der n und R die bereits angegebene Bedeutung haben.

Die bei der Erfindung für die Herstellung der Polyesterpolyole bevorzugten Lactone sind die ε-Caprolactone, bei denen n den Wert 4 hat. Das am

meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in grossen Mengen zur Verfügung steht und Überzüge mit ausgezeichneten Eigenschaften ergibt. Ausserdem können verschiedene andere Lactone einzeln oder in Kombination benutzt werden.

Beispiele von geeigneten aliphatischen Diolen schliessen ein Ethylenglykol, 1,3-Propandiol, 1,4-Butandiol, 1,4-Cyclohexandimethanol. Ein Beispiel eines geeigneten aliphatischen Triols ist Trimethylolpropan. Die bevorzugten Polycaprolactonpolyole haben Molekulargewichte im Bereich von 530 bis 3 000.

Die Polyurethane stellen eine andere Klasse von Harzen oder Polymeren dar, die als Komponente C verwendet werden können. Die Polyurethane sind bekanntlich Polyaddukte von Polyisocyanaten und einer Verbindung mit mindestens zwei reaktionsfähigen Wasserstoffatomen, das heisst Wasserstoffatomen, die sich durch die Methode von Zerewitinoff nachweisen lassen.

Beispiele von geeigneten Verbindungen mit aktiven Wasserstoffatomen sind Polyester aus Polycarbonsäuren und mehrwertigen Alkoholen, mehrwertige Polyalkylenether mit mindestens zwei Hydroxygruppen, Polythioetherglykole und Polyesteramide.

Die für die Herstellung der Polyurethane verwendeten Polyester oder Polyesteramide können verzweigt und/oder linear sein, zum Beispiel Ester von Adipinsäure, Sebazinsäure, 6-Aminocapronsäure, Phthalsäure, Isophthalsäure, Terephthalsäure, Oxalsäure, Malonsäure, Bernsteinsäure, Maleinsäure, Cyclohexan-1,2-dicarbonsäure, Cyclohexan- 1,4-dicarbonsäure, Polyacrylsäure, Naphthalin-1,2- dicarbonsäure, Fumarsäure oder Itakonsäure, mit Polyalkoholen, wie Ethylenglykol, Diethylenglykol, Pentaglykol, Glycerin, Sorbit, Triethanolamin, Di-(β-hydroxyethyl)ether und/oder Aminoalkoholen, wie Ethanolamin, 3-Aminopropanol, 5-Aminopentanol-1, 10-Aminodecanol, 6-Amino-5-methylhexanol-1, p-Hydroxymethylbenzylamin oder mit Mischungen dieser Polyakohole und Aminen, wie Ethylendiamin, 3-Methylhexamethylendiamin, Decamethylendiamin und m-Phenylendiamin und/oder Aminoalkoholen. Bei der Veresterung oder der Amidbildung kann die Säure als solche oder eine äquivalente Verbindung, wie das Säurehalogenid oder Säureanhydrid verwendet werden.

Für die Herstellung der Polyurethane können beispielsweise als Alkylenglykol oder Polyoxyalkylen- oder Polythioalkylenglykol folgende Verbindungen verwendet werden: Ethylenglykol, Propylenglykol, Butylenglykol, 2-Methylpentandiol-2,4, 2-Ethylhexandiol-1,3, Hexamethylenglykol, Styrolglykol, Diethylenglykol, Tetraethylenglykol, Polythioethylenglykol, Polyethylenglykol 200, 400, 600 und höher, Dipropylenglykol, Tripropylenglykol, Trithiopropylenglykol, Polypropylenglykol 400, 750, 1 200, 2 000 und höher.

Für die Herstellung der Polyurethane können infolgedessen beliebige Polyester, mit Polyisocyanat modifizierte Polyester, Polyesteramide, mit Polyisocyanat modifizierte Polyesteramide, Alkylenglykole, mit Polyisocyanat modifizierte Alkylenglykole, Polyoxyalkylenglykole und mit Polyisocyanat modifizierte Polyoxyalkylenglykole, die freie reaktionsfähige Wasserstoffatome, freie reaktionsfähige Carboxylgruppen und/oder insbesondere Hydroxylgruppen haben, verwendet werden. Insbesondere kann jede organische Verbindung benutzt werden, die mindestens zwei Reste aus der Klasse der Hydroxyl- und Carboxylgruppe haben.

Beispiele von geeigneten organischen Polyisocyanaten für die Herstellung der Polyurethane sind Ethylendiisocyanat, Propylen-1,2-diisocyanat, Cyclohexylendiisocyanat, m-Phenylendiisocyanat, 2,4-Toluoldiisocyanat, 3,3'-Dimethoxy-4,4-biphenylendiisocyanat, 3,3'-Dichlor- 4,4'-biphenylendiisocyanat, Triphenylmethantriisocyanat, 1,5-Naphthalindiisocyanat, hydriertes Toluylendiisocyanat, Methylen-bis(cyclohexylisocyanat), Isophorondiisocyanat, Trimethylhexamethylendiisocyanat, Lysindiisocyanat-methylester oder Polyisocyanate in blockierter bzw. verkappter bzw. inaktiver Form, wie die Bisphenylcarbonate von Toluylendiisocyanat und 1,5-Naphthalindiisocyanat.

Als polyfunktionelle SH-Verbindungen (Komponente C) kommen Umsetzungsprodukte von organischen Dihalogeniden mit Natriumpolysulfid in Betracht. Weitere SH-Verbindungen sind z.B. Umsetzungsprodukte jon hydroxylgruppenhaltigen, linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure und ähnliche.

Das aus den Komponenten (A), (B) und gegebenenfalls (C) erhaltene Zwischenprodukt weist endständige Epoxidgruppen auf. An diese Epoxidgruppen ist nun bei der Herstellung der erfindungsgemässen Bindemittel ein Mono- oder Diphenol über seine phenolische Hydroxylgruppe angelagert worden, das als Substituenten am aromatischen Ring mindestens eine α,β-olefinisch ungesättigte Amidomethylgruppe der allgemeinen Formel

$$-CH_2-NH-\overset{\overset{\displaystyle O}{||}}{C}-CR^1=CHR^2 \qquad (I)$$

trägt, $R^1$ und $R^2$ können untereinander gleich oder verschieden sein und stehen für Wasserstoff oder eine Methylgruppe.

Bevorzugt sind Gruppen der Formel (I), bei denen $R^1$ Wasserstoff oder eine Methylgruppe und $R^2$ Wasserstoff bedeuten. Hergestellt werden können diese α,β-ungesättigte Amidomethylgruppen tragenden Mono- und/oder Polyphenolen aus Phenolen bzw. Polyphenolen und Verbindungen der Formel

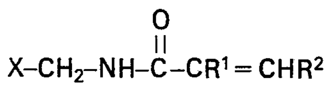 (II),

wobei X für OH, Halogen, wie z.B. Chlor oder eine Alkoxygruppe mit 1 bis 8, vorzugsweise 1 bis 4 Kohlenstoffatomen steht und $R^1$ und $R^2$ die oben angegebene Bedeutung haben.

Als Phenole sind Mono- und/oder Polyphenole, vor allem Monophenole wie Phenol und Monoalkylphenole mit bis zu 20 C-Atomen in der Alkylkette, geeignet. Auch Diphenole der allgemeinen Formel

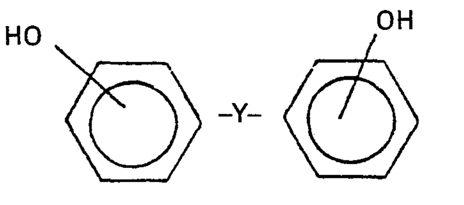 (III),

können verwendet werden, wobei die OH-Gruppen in ortho- und/oder para-Stellung zu Y stehen, und Y für einen geradkettigen oder verzweigten zweiwertigen aliphatischen Rest mit 1 bis 3 Kohlenstoffatomen oder $-SO_2-$, $-SO-$, $-S-$, $-CO-$ oder $-O-$ steht. Ein geeignetes Diphenol ist 2,2-Bis-p-hydroxyphenyl-propan (Bisphenol A).

Geeignete Monophenole sind z.B. Phenol, Kresole, o- bzw. p-tert. Butylphenol, Cardanol etc. Cardanol ist ein Naturprodukt und besteht aus einem Gemisch langkettiger 2-Alkylenphenole mit etwa 13 bis 17 Kohlenstoffatomen im Alkylenrest, z.B. 3-(8,11-Pentadekadienyl)- phenol. Bedingt durch diese Alkylenketten führt die Mitverwendung von Cardanol zu Bindemitteln, mit denen besonders elastische Überzüge hergestellt werden können.

Die Umsetzung der Phenole mit den Verbindungen der Formel (II) kann in einem weiten Temperaturbereich zweckmässigerweise in Gegenwart von Lösungsmitteln, wie Toluol, Xylol, Isobutanol, Ethylglykol, Ethylhexanol etc. durchgeführt werden.

Bei Verwendung von starken Säuren wie HCl als Katalysatoren kann bei Temperaturen um 0 °C gearbeitet werden, mit schwächer sauren Katalysatoren können Temperaturen bis etwa 160 °C nötig sein. Es ist auch möglich, Verbindungen der Formel (II) in situ herzustellen und mit dem betreffenden Phenol umzusetzen.

Bei der Umsetzung von Phenolen mit Verbindungen der Formel (II) kommt es zu einer Abspaltung von HX und einer Amidomethylierung am aromatischen Kern des Phenols. Derartige Reaktionen sind als Tscherniac-Einhorn-Reaktionen bekannt. Die Umsetzung von 2,2-Bis-p- hydroxyphenylpropan mit N-Methylolacrylamid in Eisessig mit HCl als Katalysator ist in der US-PS 3 839 447 beschrieben. Die auf diese Weise herstellbaren α,β-olefinisch ungesättigte Amidomethylgruppen tragenden Diphenole können zur Herstellung der erfindungsgemässen Polyadditionsprodukte eingesetzt werden. Durch Mitverwendung von z.B. N-Methylol-fettsäureamiden können auf einfache Weise flexibilisierend wirkende Gruppen an die Phenole addiert werden.

Es können 1 bis 3 Mol der Verbindung der Formel (II) pro Äquivalent des Phenols (= phenolische OH-Gruppe) eingesetzt werden. Im allgemeinen sind jedoch 1,5 bis 2,5 Mol pro Äquivalent Phenol ausreichend, um eine optimale Vernetzungsdichte im fertigen Lackfilm zu erzielen.

Das für die weitere Umsetzung mit einem Teil der Doppelbindungen verwendeteAmin kann primär oder sekundär sein, wobei sekundäre Amine sich besonders gut eignen. Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie z.B. Methylethanolamin, Diethanolamin und dergleichen. Ferner sind Dialkylaminoalkylamine wie z.B. Dimethylaminoethylamin, Diethylaminopropylamin und dergleichen geeignet.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Die Amine können auch noch andere Gruppen enthalten, doch sollen diese die Addition des Amins an die Doppelbindungen nicht stören und auch nicht zu einer Gelierung der Reaktionsmischung führen.

Die Addition des Amins an die α,β-olefinisch ungesättigte Säureamidgruppe im Sinne einer Michaeladdition läuft bei Temperaturen unterhalb 120 °C ab.

Für die Umsetzung sollte mindestens eine solche Menge an Amin verwendet werden, dass das Harz einen kationischen Charakter annimmt, d.h. dass es unter dem Einfluss einer Spannung in dem Beschichtungsbad zu der Kathode wandert, wenn es durch Zugabe einer Säure löslich gemacht worden ist.

Die speziellen Ausgangsstoffe, Mengenanteile und Reaktionsbedingungen werden in Übereinstimmung mit den gut bekannten Erfahrungen so ausgewählt, dass eine Gelierung des Produktes während der Reaktion vermieden wird. So werden z.B. übermässig aggressive Reaktionsbedingungen nicht verwendet. In ähnlicher Weise werden Ausgangsstoffe mit reaktionsfähigen Substituenten, die sich mit den Epoxyverbindungen umsetzen können, nicht benutzt, da sie die Reaktion nachteilig beeinflussen können.

Die unter Verwendung der erfindungsgemässen Bindemittel erhaltenen Überzüge können beim Einbrennen durch Polymerisationsreaktionen der im Bindemittelmolekül vorhandenen Doppelbindungen gehärtet werden. Vorteilhaft können dem Elektrotauchlack aber auch noch zusätzliche Vernetzungsmittel zugesetzt werden,

oder es ist möglich, weitere reaktive Gruppen, die bei erhöhten Temperaturen eine Selbstvernetzung bewirken, in das Bindemittelmolekül einzuführen. Dies kann vorteilhaft dadurch erreicht werden, dass ein Teil der durch die Öffnung der Epoxidringe entstandenen Hydroxylgruppen des Bindemittels mit einem teilweise blockierten Polyisocyanat umgesetzt wird, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den restlichen Hydroxylgruppen unter Urethanbildung reagieren.

Häufig angewandte Methoden zur Vernetzung von Bindemitteln sind z.B. in folgenden Offenlegungsschriften publiziert: DE-OS 2 057 799, europäische Patentanmeldungen 12 463 und 4090 und DE-OS 2 752 256.

Wenn Vernetzungsmittel benutzt werden, machen sie in der Regel etwa 5 bis etwa 60 Gew.-% des Bindemittels aus. Bevorzugt sind etwa 20 bis etwa 40 Gew.-% des Bindemittels.

Beispiele von geeigneten Aminoplastvernetzungsmitteln sind der Hexamethylether von Hexamethylolmelamin, der Triethyltrimethylether von Hexamethylolmelamin, der Hexabutylether von Hexamethylolmelmain und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und einen Aldehyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so dass das gebildete blockierte Polyisocyanat gegenüber Hydroxylgruppen bei Raumtemperatur beständig ist, bei erhöhten Temperaturen, in der Regel im Bereich von etwa 90 bis etwa 200 °C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele von geeigneten Diisocyanaten sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Biphenylendiisocyanat, 1,5-Naphthylendiisocyanat, 1,4-Naphthylendiisocyanat, 1-Isocyanatomethyl-5- isocyanato-1,3,3- trimethylcyclohexan, Bis-(4-isocyanatocyclohexyl) methan, Bis-(4-isocyanatophenyl) methan, 4,4'-Diisocyanatodiphenylether und 2,3-Bis (8-isocyanatooctyl) -4-octyl-5-hexylcyclohexan. Es können auch Polyisocyanate von höherer Isocyanatfunktionalität verwendet werden. Beispiele dafür sind Tris-(4-isocyanatophenyl) methan, 1,3,5-Triisocyanatobenzol, 2,4,6-Triisocyanatotoluol, 1,3,5-Tris- (6-isocyanatohexyl) biuret, Bis (2,5-diisocyanato-4-methylphenyl) methan und polymere Polyisocyanate, wie Dimere und Trimere von Diisocyanatotoluol. Ferner kann man auch Mischungen von Polyisocyanaten benutzen.

Die bei der Erfindung als Vernetzungsmittel in Betracht kommenden organischen Polyisocyanate können auch Präpolymere sein, die sich beispielsweise von einem Polyol einschliesslich eines Polyetherpolyols oder eines Polyesterpolyols ableiten. Dazu werden bekanntlich Polyole mit einem Überschuss von Polyisocyanaten umgesetzt, wodurch Präpolymere mit endständigen Isocyanatgruppen entstehen. Beispiele von Polyolen, die hierfür verwendet werden können, sind einfache Polyole, wie Glykole, z.B. Ethylenglykol und Propylenglykol, und andere Polyole, wie Glycerin, Trimethylolpropan, Hexantriol und Pentaerythrit; ferner Monoether, wie Diethylenglykol und Tripropylenglykol sowie Polyether, die Kondensate solcher Polyole mit Alkylenoxiden sind. Beispiele von Alkylenoxiden,die sich für die Kondensation mit diesen Polyolen unter Bildung von Polyethern eignen, sind Ethylenoxid, Propylenoxid, Butylenoxid und Styroloxid. Man bezeichnet diese Kondensate im allgemeinen als Polyether mit endständigen Hydroxylgruppen. Sie können linear oder verzweigt sein. Beispiele von solchen Polyethern sind Polyoxyethylenglykol von einem Molekulargewicht von 1 540, Polyoxypropylenglykol mit einem Molekulargewicht von 1 025, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern, können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Pentaerythrit, Dipentaerythrit, Tripentaerythrit, Polypentaerythrit, Methylglukosiden und Saccharose mit Alkylenen, wie Ethylenoxid, Propylenoxid oder Mischungen davon.

Für die Blockierung der Polyisocyanate können beliebige geeignete aliphatische, cycloaliphatische oder aromatische Alkylmonoalkohole verwendet werden.Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylakohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.

Andere geeignete Blockierungsmittel sind Hydroxylamine, wie Ethanolamin und Oxime, wie Methylethylketonoxim, Acetonoxim und Cyclohexanonoxim.

Die blockierten Polyisocyanate werden hergestellt, indem man eine ausreichende Menge eines Alkohols mit dem organischen Polyisocyanat umsetzt, so dass keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher ist als 80 °C, insbesondere niedriger als 50 °C ist, gemischt, um dem exothermen Effekt entgegenzuwirken.

Die genannten Polyisocyanate und Blockierungsmittel können bei geeigneten Mengenverhältnissen auch zur Herstellung der oben beschriebenen teilblockierten Polyisocyanate verwendet werden.

Die Erfindung betrifft auch ein Verfahren zur Herstellung der Bindemittel, das dadurch gekennzeichnet ist, dass

(A) niedermolekulare, aromatische Gruppen enthaltende Epoxidharze mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart umgesetzt werden, dass die Umsetzungsprodukte einen Anteil an aromatischen Gruppen, berechnet als Phenylengruppe, von 10 bis 45% enthalten, diese Umsetzungsprodukte mit

(C) gegebenenfalls bis zu 60 Gew.-%, bezogen auf das gesamte Bindemittel, polyfunktionellen Alkoholen, Carbonsäuren und/oder SH-Verbindungen mit einem Molekulargewicht von 300 bis 5 000 weiter umgesetzt werden, wobei die Molverhältnisse von (A), (B) und gegebenenfalls (C) so gewählt werden, dass das resultierende Zwischenprodukt endständige Epoxidgruppen aufweist,

(D) dieses Zwischenprodukt unter Addition einer phenolischen Hydroxylgruppe eines Mono- und/oder Diphenols an die Epoxidgruppen weiter umgesetzt wird, wobei das Mono- oder Diphenol als Substituenten an dem oder den aromatischen Ringen mindestens eine Gruppierung der allgemeinen Formeln

$$-CH_2-NH-\overset{\overset{\displaystyle O}{\|}}{C}-CR^1=CHR^2 \qquad (I)$$

trägt, in der $R^1$ und $R^2$ untereinander gleich oder verschieden sind und für Wasserstoff oder eine Methylgruppe stehen, mit der Massgabe, dass zumindest an einen Teil der Gruppierungen der Formel (I) primäre und/oder sekundäre Amine addiert werden, wobei die Aminaddition vor oder nach der Umsetzung der phenolischen Hydroxylgruppen mit den Epoxidgruppen durchgeführt werden kann. Das Verfahren wird folgendermassen durchgeführt: Die Komponente A und die Komponente B werden gemischt und gegebenenfalls unter Hinzugabe von Katalysatoren, wie z.B. tertiären Aminen, bei Temperaturen zwischen 100 und 140 °C, vorzugsweise 115 bis 135 °C, vollständig umgesetzt. Die Umsetzung kann anhand des Epoxidäquivalentgewichtes überprüft werden. Dieses Reaktionsprodukt aus den Komponenten A und B kann gegebenenfalls mit der Komponente C bei Temperaturen zwischen 100 und 140 °C weiter modifiziert werden. Auch diese Umsetzung kann anhand des Epoxidäquivalentgewichtes kontrolliert werden. Das so erhaltene Reaktionsprodukt enthält noch freie Epoxidgruppen. Für diesen Reaktionsschritt können die gleichen Katalysatoren verwendet werden wie bei der Umsetzung der Komponenten A und B. Das so erhaltene Reaktionsprodukt wird mit dem modifizierten Mono- oder Diphenol der Komponente D bei Temperaturen zwischen 90 und 120 °C umgesetzt. Im letzten Reaktionsschritt wird das Amin an die Doppelbindungen angelagert, so dass ein Bindemittel entsteht, das basische Aminogruppen enthält. Alternativ dazu kann auch das Amin an die Doppelbindungen des modifizierten Phenols angelagert werden, bevor dieses mit den Epoxidgruppen umgesetzt wird.

Das basische Reaktionsprodukt kann durch Zugabe von Säuren ganz oder teilweise protonisiert werden und anschliessend in Wasser dispergiert werden. Das Vernetzungsmittel kann vor der Dispergierung in Wasser dem Bindemittel zugemischt werden oder je nach Reaktivität während der Herstellung des Bindemittels zugeführt werden. Im Falle von teilblockierten Polyisocyanaten werden diese bei Temperaturen zwischen 80 und 150 °C, vorzugsweise bei Temperaturen zwischen 100 und 130 °C, mit dem Bindemittel umgesetzt. Die erhaltenen Elektrotauchlacke stellen stabile gut handhabbare Dispersionen dar.

Gegebenenfalls kann es auch zweckmässig sein, vor der Dispersionsherstellung die Bindemittel in geeigneten organischen Lösungsmitteln zu lösen. Geeignete Lösungsmittel sind z.B. Glykolether, Ethylglykol, Butylglykol, Ketone, wie Diethylketon, Methylethylketon, Methylisobutylketon und andere.

Die Erfindung betrifft ferner die Verwendung der Bindemittel für Elektrotauchbäder.

Die Elektrotauchbäder können übliche Pigmente enthalten. Häufig wird den Pigmenten ein Dispergiermittel oder ein oberflächenaktives Mittel zugesetzt. Das Pigment und das gegebenenfalls verwendete oberflächenaktive Mittel werden zusammen in einem Teil des Bindemittels oder allein gemahlen, um eine Paste herzustellen, die mit dem restlichen Bindemittel zur Herstellung der Überzugsmasse verschnitten wird.

In manchen Fällen ist es vorteilhaft, dem Elektrotauchbad ein nicht ionisches Modifizierungsmittel oder Lösungsmittel zuzusetzen, um die Dispergierbarkeit, die Viskosität und/oder die Filmqualität zu verbessern. Beispiele von solchen Materialien sind aliphatische, naphtenisch und aromatische Kohlenwasserstoffe oder Mischungen davon; Mono- und Dialkylether von Glykolen, sibirisches Fichtennadelöl und andere Lösungsmittel, die mit dem Harzsystem verträglich sind. Das zur Zeit bevorzugte Modifizierungsmittel ist 4-Methoxy-4-methylpentanon-2.

Dem Elektrotauchbad können ausserdem noch andere Zusatzstoffe, wie Antioxidantien zugesetzt werden. Beispiele dafür sind ortho-Amylphenol oder Kresol. Die Zugabe solcher Antioxidantien ist dann besonders erwünscht, wenn die Abscheidungsbäder atmosphärischem Sauerstoff bei erhöhten Temperaturen unter Rühren für längere Zeiträume ausgesetzt sind.

Andere Zusätze, die das Bad gegebenenfalls enthalten kann, sind Netzmittel, wie Erdölsulfonate, sulfatierte Fettamine oder ihre Amide, Ester von Natriumisothionaten, Alkylphenoxypolyethylenalkohole oder Phosphatester, einschliesslich von ethoxylierten Alkylphenolphosphaten. Andere Gruppen von möglichen Zusätzen sind Antischaummittel und Suspendiermittel. Für die Formulierung des Abscheidungsbades kann normales Leitungswasser verwendet werden. Da ein derartiges Wasser aber relativ hohe Anteile an Salzen enthält, können dadurch unerwünschte Änderungen bei der elektrischen Abscheidung auftreten. Es wird deshalb im allgemeinen entionisiertes Wasser bevorzugt.

Die vorstehend aufgeführten möglichen Zusätze sind nicht vollständig, da beliebige andere Zusätze, die bei der elektrischen Abscheidung nicht stören, benutzt werden können.

Die Erfindung betrifft weiterhin ein Verfahren zum elektrophoretischen Beschichten eines elektrisch leitenden als Kathode geschalteten Substrats aus einem wässrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, das dadurch gekennzeichnet ist, dass die Bindemittel hergestellt worden sind durch Umsetzung von

(A) niedermolekularen, aromatische Gruppe enthaltenden Epoxidharzen mit einem Epoxidäquivalentgewicht von unter 375 mit

(B) aliphatischen und/oder alicyclischen polyfunktionellen Alkoholen oder Carbonsäuren mit einem Molekulargewicht unter 350 unter Addition an die Epoxidgruppe derart, dass die Umsetzungsprodukte einen Anteil an aromatischen Gruppen, berechnet als Phenylengruppe, von 10 bis 45% enthalten und die Umsetzungsprodukte von (A) mit (B) mit

(C) gegebenenfalls bis zu 60 Gew.-%, bezogen auf das gesamte Bindemittel, polyfunktionellen Alkoholen, Carbonsäuren und/oder SH-Verbindungen mit einem Molekulargewicht von 300 bis 5 000 weiter umgesetzt worden sind, wobei die Molverhältnisse von (A), (B) und gegebenenfalls (C) so gewählt worden sind, dass das erhaltene Zwischenprodukt endständige Epoxidgruppen aufweist,

(D) durch weitere Umsetzung des Zwischenproduktes unter Addition einer phenolischen Hydroxylgruppe eines Mono- und/oder Diphenols an die Epoxidgruppen, wobei das Mono- oder Diphenol als Substituenten an dem oder den aromatischen Ringen mindestens eine Gruppierung der allgemeinen Formel

$$-CH_2-NH-\overset{\displaystyle O}{\overset{\|}{C}}-CR^1=CHR^2 \qquad (I)$$

trägt, in der $R^1$ und $R^2$ untereinander gleich oder verschieden sind und für Wasserstoff oder eine Methylgruppe stehen, mit der Massgabe, dass zumindest an einen Teil der Gruppierungen der Formel (I) primäre und/oder sekundäre Amine addiert sind, wobei die Aminaddition vor oder nach der Umsetzung der phenolischen Hydroxylgruppen mit den Epoxidgruppen durchgeführt worden sein kann.

Als Substrat kann bei der elektrischen Abscheidung ein beliebiges elektrisch leitendes Substrat dienen. Üblicherweise handelt es sich dabei um Metallsubstrate, wie z.B. Eisen, Stahl, Kupfer, Zink, Messing, Zinn, Nickel, Chrom und Aluminium sowie um andere Metalle, vorbehandelte Metalle, ferner phosphatierte oder chromatierte Metalle. Auch imprägniertes Papier und andere leitende Substrate können benutzt werden.

Bei der kationischen Abscheidung werden die zu überziehenden Gegenstände in eine wässrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Die Erfindung wird in den folgenden Beispielen noch näher erläutert. Alle Angaben über Teile und Prozentsätze sind Gewichtsangaben, falls nicht ausdrücklich etwas anderes festgestellt wird.

Beispiel 1

a) Herstellung eines mit einer α,β-olefinisch ungesättigten Amidomethylgruppe substituierten Phenols (Vorprodukt 1)

94 Teile Phenol und 202 Teile Methylolacrylamid werden bei 50 °C in 456 Teilen Essigsäure gelöst, anschliessend auf 15 °C abgekühlt, und bei dieser Temperatur wird HCl-Gas bis zu Sättigung eingeleitet. Anschliessend lässt man die Temperatur auf 25 °C ansteigen, wobei leicht gekühlt werden muss. Nach 2 Stunden wird mit 1 500 Teilen Methylenchlorid verdünnt und anschliessend 4 mal mit je 1 500 Teilen Wasser ausgeschüttelt.

Schliesslich wird noch einmal mit einer Lösung von 100 Teilen Natriumcarbonat in 2 000 Teilen Wasser ausgeschüttelt und die organische Phase über Natriumsulfat getrocknet. Nach Abziehen des Lösungsmittels in Vakuum bei 80 °C bleibt eine nahezu farblose Masse zurück.

b) Herstellung eines Vernetzungsmittels (Vorprodukt 2).

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet ist, wird mit 12 280 Teilen Toluylendiisocyanat (Mischung aus etwa 80% 2,4-Toluylendiisocyanat und etwa 20% 2,6-Toluylendiisocyanat) beschickt. Es wird Stickstoff eingeleitet, und der Kühler wird eingeschaltet. Im Verlauf von 5 Stunden werden 5 550,5 Teile 2-Ethylhexanol allmählich zugegeben, wobei die Temperatur langsam auf 50 °C steigt. Während die Temperatur von 50 °C aufrechterhalten wird, werden weitere 3 649,5 Teile 2-Ethylhexanol im Verlauf von 4 Stunden zugegeben. Die Reaktionsmischung wird 75 Minuten bei 50 °C gehalten, dann wird der Kühler abgeschaltet, und es werden 3,6 Teile Dibutylzinndilaurat zugegeben. Die Heizvorrichtung wird angeschaltet und die Reaktionsmischung wird im Verlauf von 45 Minuten auf 65,6 °C erwärmt. Im Verlauf von 2 Stunden und 50 Minuten werden 3 184 Teile 1,1,1-Trimethylolpropan zugegeben, wobei die Temperatur auf 120 °C steigt. Die Reaktionsmischung wird bei dieser Temperatur 90 Minuten gehalten, dann werden 10 560 Teile 2-Ethoxyethanol zugegeben. Das entstandene Produkt ist eine Lösung eines Polyurethanvernetzungsmittel.

c) Herstellung eines Bindemittels

Ein Reaktor, der mit einer Heizeinrichtung, einem Rührer, einem Thermometer, einem Kühler und einer Stickstoffeinleitung ausgestattet ist, wird mit 998 Teilen eines handelsüblichen Epoxidharzes auf Basis Bisphenol A mit einem Epoxidäquivalentgewicht von 188 und 212 Teilen 2-Ethyl-2-tutylpropandiol-1,3 sowie 5,4 Teilen Dimethylbenzylamin beschickt. Die Temperatur wird auf 132 °C angehoben, und die Reaktion wird durchgeführt, bis ein Epoxidäquivalentgewicht von 440 erreicht ist. Danach werden 458 Teile einer 80%igen Lösung in Xylol eines handelsüblichen Polylaktonpolyols mit einem Molekulargewicht von 550 und 4,1 Teile Dimethylbenzylamin zugegeben. Die Reaktionstemperatur wird bei 132 °C gehalten, bis ein Epoxidäquivalentgewicht von 1 150 erreicht ist. Danach werden 33 Gew.-%, bezogen auf den Festkörper, des oben beschriebenen Vernetzungsmittel (Vorprodukt 2) zugegeben. Man fügt 1 Teil 2,6-Di-tert.-butyl-p-Kresol und 345 Teile des modifizierten Phenols (Vorprodukt 1) und 5 Teile Tributylphosphin zu. Die Temperatur wird bei 85 °C gehalten, bis keine Epoxidgruppen mehr nachweisbar sind. Hierauf setzt man 166 Teile Hexylglykol zu und kühlt auf 60 °C. Man gibt 279 Teile Diethanolamin zu. Inzwischen wird ein Dispergierbad aus 1919 Teilen entionisiertem Wasser, 36 Teilen Eisessig und 62 Teilen einer handelsüblichen Emulgatormischung vorbereitet. Hierin wird die Harzlösung dispergiert. Nach etwa 90 Minuten werden weitere 1478 Teile entionisiertes Wasser zugesetzt, 15 Minuten untergemischt.

d) Herstellung einer Pigmentpaste (Vorprodukt 3)

Ein Reaktor, der mit einer Heizvorrichtung, einem Kühler, einem Rührer und einer Stickstoffeinleitung ausgerüstet ist, wird mit 1 948 g Bisphenol-A-diglycidyl- ether und 817 Teilen 2,2-Dimethyl-3-hydroxypropyl- 2,2-dimethyl-3-hydroxypropionat beschickt. Der Ansatz wird nun erhitzt und die Temperatur bei 132 °C gehalten, bis ein Epoxidäquivalentgewicht von 1 350 erreicht ist. Dann werden 675 g einer 90%igen Lösung in Methylisobutylketon des halbverkappten Diisocyanats aus 2-Ethylhexanol und Toluylendiisocyanat zugesetzt. Hierzu gibt man nun langsam 3 109 g Butylglykol und kühlt auf 80 °C ab. Inzwischen wird folgendes Ammoniumsalz vorbereitet: in 40,4 Teilen Butylglykol werden das Umsetzungsprodukt aus 89,9 Teilen Diethanolamin und 330,9 Teilen eines halbverkappten Diisocyanats aus 2-Ethylhexanol und Toluylendiisocyanat (95%ig in Methylisobutylketon) mit einer Mischung aus 121,3 Teilen 88%iger Milchsäure und 95,7 Teilen entionisiertem Wasser neutralisiert. Von diesem Ammoniumsalz werden 884,1 g zu obigem Ansatz zugefügt. Dann werden nochmals 220 g Butylglykol zugegeben, und der Ansatz wird für 4 Stunden bei 80 °C gehalten. Anschliessend wird die Harzlösung filtriert.

Danach wird eine klare Lösung von 224 g Harzlösung, 419 g entionisiertem Wasser und 3,2 g Dibutylzinnoxid hergestellt. In einer Mühle wird auf einer Hegman-Feinheit 7 gemahlen und die Mahlung danach filtriert.

Die Pigmentpaste wird aus folgenden Komponenten formuliert: 387 g der Harzlösung werden mit 631 g entionisiertem Wasser, 387 g Aluminiumsilikat, 68 g Bleisilikat und 54,2 g Russ gemischt. Die Mischung wird 15 Minuten auf einer Cowles-Mühle angemahlen. Danach werden 34 g Strontiumchromat zugesetzt. Danach wird das Material in einer Mühle auf eine Hegman-Feinheit 7 gemahlen. Es werden noch 55,5 g der oben beschriebenen, klaren Lösung zugemischt. Die Mischung wird filtriert und als schwarze Pigmentpaste eingesetzt.

e) Bereitung eines Abscheidebades und Herstellung eines Überzuges

Die gemäss c) erhaltene Harzdispersion wird mit der beschriebenen Pigmentpaste (Vorprodukt 3) nach folgender Rezeptur komplettiert:

2 100 Teile Harzdispersion,
710 Teile Pigmentpaste,
25 Teile Essigsäure (10%ig),
2 165 Teile entionisiertes Wasser.

Die Abscheidung des Überzuges aus dem so hergestellten Elektrotauchbad erfolgt während 2 Minuten auf einem als Kathode geschalteten Blech bei einer Spannung von 260 V bei 25 °C Badtemperatur. Die Aushärtung erfolgt bei 185 °C

während 15 Minuten. Der eingebrannte Film weist eine Schichtdicke von 35 µm auf und zeichnet sich bei guter Glätte durch sehr gute Elastizität aus.

Beispiel 2

Ein Reaktor, der mit einer Heizeinrichtung, einem Rührer, einem Thermometer, einem Kühler und einer Stickstoffeinleitung ausgestattet ist, wird mit 1 083 Teilen eines handelsüblichen Epoxidharzes auf Basis Bisphenol A mit einem Epoxidäquivalentgewichtvon 188 und 294 Teilen Hydroxypivalinsäureneopenthylglykolester sowie 69 Teilen Xylol beschickt. Zur Katalyse setzt man 6 Teile Dimethylbenzylamin zu. Die Temperatur wird auf 135 °C angehoben, und die Reaktion wird durchgeführt, bis ein Epoxidäquivalentgewicht von 460 erreicht ist. Danach werden 417 Teile einer 95%igen Lösung in Xylol eines handelsüblichen Polylactonpolyols mit einem Molekulargewicht von 550 und 4 Teile Dimethylbenzylamin zugegeben. Die Temperatur wird bei 135 °C gehalten, bis ein Epoxidäquivalentgewicht von 1 210 erreicht ist. Danach fügt man 1 Teil 2,6-Di-tert.-butyl-p-Kresol und 374 Teile des im Beispiel 1 beschriebenen Vorproduktes 1 zu sowie 5 Teile Tributylphosphin. Man hält die Temperatur auf 85 °C, bis keine Epoxidgruppen mehr nachzuweisen sind. Hierauf gibt man 129 Teile Phenylglykol zu, kühlt auf 60 °C ab und setzt 302 Teile Diethanolamin zu. Die Temperatur soll hierbei 60 °C nicht überschreiten. Inzwischen wird aus 2 359 Teilen entionisiertem Wasser, 43 Teilen Eisessig und 24 Teilen einer handelsüblichen Emulgatormischung ein Dispergierbad vorbereitet. Hierin wird die obige Harzlösung dispergiert. Nach 90 Minuten werden weitere 1 895 Teile entionisiertes Wasser zugegeben und 15 Minuten untergemischt.

Aus der so erhaltenen Harzdispersion wird wie im Beispiel 1 e) ein Abscheidebad bereitet.

Die Abscheidung erfolgt während 2 Minuten bei 290 V auf einem als Kathode geschalteten phosphatierten Stahlblech. Die Badtemperatur beträgt 27 °C. Die Härtung des abgeschiedenen Films erfolgt während 20 Minuten bei 180 °C. Der eingebrannte Film weist eine Schichtdicke von 38 µm auf. Er hat einen sehr guten Verlauf und eine hohe Elastizität.

Beispiel 3

Die Bindemittelsynthese von Beispiel 2 wird wiederholt, jedoch wird statt des handelsüblichen Polylactonpolyols ein Umsetzungsprodukt I aus 3 Mol Polyglykol und 2 Mol Hexamethylendiisocyanat eingesetzt. Die Synthesebedingungen des Bindemittels entsprechen genau den Bedingungen der Synthese von Beispiel 2, die Einwaagen sind jedoch:

| | |
|---|---|
| – Epoxidharz | 973 Teile |
| – Hydroxypivalinsäure-neopentglykolester | 264 Teile |
| – Xylol | 62 Teile |
| – Dimethylbenzylamin | 6 Teile |
| – Umsetzungsprodukt I | 605 Teile |
| – Dimethylbenzylamin | 4 Teile |
| – Vorprodukt 1 | 336 Teile |
| – Phenylglykol | 131 Teile |
| – Diethanolamin | 272 Teile |
| – entionisiertes Wasser | 2 124 Teile |
| – Eisessig | 77 Teile |
| – Emulgatormischung | 49 Teile |
| – entionisiertes Wasser | 2 099 Teile |

Das Epoxidäquivalentgewicht vor der Zugabe von Vorprodukt 1 beträgt 1400.

Bereitung eines Abscheidebades

Das Abscheidebad wird entsprechend dem Beispiel 1 formuliert.

Die Abscheidung erfolgt während 2 Minuten bei 320 V auf dem als Kathode geschalteten phosphatierten Blech aus dem Bad bei 27 °C.

Die Einbrennung wird bei 185 °C während 15 Minuten durchgeführt. Die Schichtdicke beträgt dann 42 µm.

Dieser Badansatz zeichnet sich durch einen besonders guten Umgriff bei der Abscheidung aus.

Beispiel 4

Vorprodukt 4

500 Teile Dihydroxydiphenylsulfon und 606 Teile Methylolacrylamid werden bei 50 °C in 456 Teilen Essigsäure gelöst, anschliessend auf 15 °C abgekühlt und bei dieser Temperatur HCl-Gas bis zu Sättigung eingeleitet. Danach wird 6 Stunden auf 65 °C erhitzt. Anschliessend lässt man den Ansatz auf Raumtemperatur abkühlen, verdünnt mit 2000 Teilen Methylenchlorid und schüttelt 4 mal mit je 2000 Teilen Wasser aus. Beim Ausschütteln mit Wasser gibt man zur Löslichkeitsvermittlung etwas Aceton zu. Abschliessend wird noch einmal mit einer Lösung von 100 Teilen Natriumcarbonat in 2000 Teilen Wasser ausgeschüttelt und die organische Phase über Natriumsulfat getrocknet. Das Lösungsmittel wird im Vakuum bei 80 °C abgezogen.

Herstellung des Bindemittels

Der Reaktor wird mit 744 Teilen eines handelsüblichen Epoxidharzes auf Basis Bisphenol A (Epoxidäquivalentgewicht 188), 149 Teilen Thiodipropylenglykol und 54 Teilen Xylol sowie 6 Teilen Dimethylbenzylamin beschickt. Die Temperatur wird auf 135 °C angehoben und solange gehalten bis ein Epoxidäquivalentgewicht von 420 erreicht ist. Dann werden 423 Teile eines Polyesters aus Neopentylglykol und Adipinsäure (OH-Zahl 131) und 4 Teile Dimethylbenzylamin zugefügt. Die Temperatur wird wieder auf 135° angehoben und solange gehalten, bis ein Epoxidäquivalentgewicht von 1280 erreicht ist. Darauf werden 1,5 Teile 2,6-Di-tert.-butyl-p-Kresol und 494 Teile des Vorprodukts 4 bei 135 °C zugefügt und die Reaktion durchgeführt bis keine Epoxidgruppen mehr nachgewiesen sind. Danach kühlt man auf 110 °C ab und setzt 470 Teile der im Beispiel 1 beschriebenen Vernetzerlösung und 136 Teile Propylenglykolmonophenylether zu. Man

mischt 15 Minuten und kühlt danach auf 70 °C ab. Nun fügt man 312 Teile Diethanolamin zu. Die Temperatur muss hierbei bei 70 °C gehalten werden.

Inzwischen wird aus 2193 Teilen entionisiertem Wasser, 37 Teilen einer handelsüblichen Emulgatormischung und 89 Teilen Eisessig ein Dispergierbad zubereitet. Hierzu wird die Harzlösung dispergiert. Nach 90 Minuten fügt man weitere 1896 Teile entionisiertes Wasser zu und mischt sie 15 Minuten unter. Die Dispersion hat nun einen Festkörper von 37,5%.

Bereitung des Abscheidebades

Entsprechend dem Beispiel 1 wird ein Abscheidebad angesetzt.

Die Abscheidung erfolgt bei 27 °C Badtemperatur an dem als Kathode geschalteten, phosphatierten Blech während 2 Minuten bei 280 V. Der abgeschiedene Film wird bei 185 °C während 15 Minuten eingebrannt. Es resultiert ein Film von 37 µm Dicke. Der Film ist gut ausgespannt und zeigt eine hervorragende Haftung auf dem Untergrund.

Beispiel 5

Ein Reaktionsgefäss wird mit 923 Teilen eines handelsüblichen Epoxidharzes auf Basis Bisphenol A (Epoxidäquivalentgewicht 188), 162 Teilen Dimethylmalonsäure und 71 Teilen Xylol sowie 6 Teilen Dimethylbenzylamin beschickt. Die Temperatur wird auf 145 °C angehoben und die Reaktion durchgeführt, bis ein Epoxidäquivalentgewicht von 420 erreicht ist. Man kühlt auf 130 °C ab und setzt 332 Teile eines handelsüblichen Polycaprolactonpolyols (OH-Zahl 210) sowie 4 Teile Dimethylbenzylamin zu. Man hält den Reaktionsansatz bei 130 °C, bis ein Epoxidäquivalentgewicht von 1100 erreicht ist. Man gibt 2 Teile 2,6-Di-tert.-butyl-p-Kresol und 613 Teile des oben beschriebenen Vorprodukts 4 zu, erhöht die Temperatur wieder auf 145 °C und setzt die Reaktion fort, bis keine Epoxidgruppen mehr nachweisbar sind. Dann gibt man 163 Teile eines handelsüblichen Gemisches verschiedener Diisobutylester zu und kühlt auf 60 °C ab und gibt 193 Teile Diethanolamin und 138 Teile Methylethanolamin zu. Nach Anlagerung der Amine setzt man 3 Teile eines handelsüblichen Cr-haltigen Katalysators und 88 Teile Butylenoxid zu. Die Reaktion wird bei 80 °C durchgeführt, bis keine Epoxidgruppen mehr nachweisbar sind. Inzwischen wird ein Dispergierbad aus 2051 Teilen entionisiertem Wasser, 49 Teilen einer handelsüblichen Emulgatormischung und 73 Teilen Eisessig vorbereitet, Hierzu wird die Harzlösung dispergiert. Nach 90 Minuten werden weitere 2100 Teile entionisiertes Wasser zugegeben und 15 Minuten untergemischt. Die Dispersion weist dann einen Festkörper von 35% auf.

Bereitung eines Abscheidebades

Entsprechend der Formulierung in Beispiel 1 wird ein Abscheidebad angesetzt.

Die Abscheidung des Lackes erfolgt bei 27 °C Badtemperatur an dem als Kathode geschalteten phosphatiertem Blech während 2 Minuten bei 290 V. Der abgeschiedene Film wird bei 185 °C während 20 Minuten eingebrannt. Die Filmdicke beträgt 41 µm.

Beispiel 6

Man verfährt wie unter Beispiel 1 a). Nachdem das Methylenchlorid im Vakuum abgezogen worden ist, werden 210 Teile Diethanolamin und 100 Teile Phenylglykol zugegeben und 2 Stunden bei 90 °C gehalten.

Es wird nun wie unter Beispiel 2 beschrieben aus 1083 Teilen Epoxidharz auf Basis Bisphenol A, 294 Teilen Hydroxypivalinsäureneopentylglykolester und 417 Teilen Polylactonpolyol, ein Umsetzungsprodukt mit einem Epoxidäquivalentgewicht von 1210 hergestellt.

Man setzt nun 819 Teile des oben beschriebenen Anlagerungsproduktes von Diethanolamin und acrylamidomethyliertem Phenol zu und hält die Temperatur bei 85 °C, bis keine Epoxidgruppen mehr nachweisbar sind. Inzwischen wird aus 2359 Teilen entionisiertem Wasser, 43 Teilen Eisessig und 24 Teilen einer handelsüblichen Emulgatormischung ein Dispergierbad vorbereitet. Hierin wird die obige Harzlösung dispergiert. Nach 90 Minuten werden weitere 1895 Teile entionisiertes Wasser zugegeben und 15 Minuten untergemischt.

Aus der erhaltenen Harzlösung wird wie in Beispiel 2 ein Abscheidebad bereitet und die Abscheidung vorgenommen. Der eingebrannte Film weist eine Schichtdicke von 42 µm auf bei sehr gutem Verlauf.

**Patentansprüche**

1. Wasserdispergierbare Bindemittel für kationische Elektrotauchlacke auf der Basis von Umsetzungsprodukten von modifizierten Epoxidharzen und primären und/oder sekundären Aminen, die gegebenenfalls Vernetzungsmittel, Pigmente, Verlaufsmittel und andere übliche Hilfsmittel enthalten, dadurch gekennzeichnet, dass als Umsetzungsprodukte solche enthalten sind, die hergestellt worden sind durch Umsetzung von

(A) niedermolekularen, aromatische Gruppen enthaltenden Epoxidharzen mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart, dass die Umsetzungsprodukte einen Anteil an aromatischen Gruppen, berechnet als Phenylengruppe, von 10–45% enthalten, und weitere Umsetzung der Reaktionsprodukte von A und B mit

(C) gegebenenfalls bis zu 60 Gew.-%, bezogen auf das gesamte Bindemittel, polyfunktionellen Alkoholen, Carbonsäuren und/oder SH-Verbindungen mit einem Molekulargewicht von 300–5 000, wobei die Molverhältnisse von (A), (B) und gegebenenfalls (C) so gewählt worden sind, dass das erhaltene Zwischenprodukt endständige Epoxidgruppen aufweist, und

(D) durch weitere Umsetzung des Zwischenprodukts unter Addition einer phenolischen Hydroxylgruppe eines Mono- und/oder Diphenols an die Epoxidgruppen, wobei das Mono- oder Diphenol als Substituenten an dem oder den aromatischen Ringen mindestens eine Gruppierung der allgemeinen Formel

$$-CH_2-NH-\overset{\overset{\displaystyle O}{\|}}{C}-CR^1=CHR^2 \qquad (I)$$

trägt, in der $R^1$ und $R^2$ untereinander gleich oder verschieden sind und für Wasserstoff oder eine Methylgruppe stehen, mit der Massgabe, dass zumindest an einen Teil der Gruppierungen der Formel (I) primäre und/oder sekundäre Amine addiert sind, wobei die Aminaddition vor oder nach der Umsetzung der phenolischen Hydroxylgruppen mit den Epoxidgruppen durchgeführt worden sein kann.

2. Bindemittel nach Anspruch 1, dadurch gekennzeichnet, dass als Komponente A ein Epoxidharz auf Basis Bisphenol A eingesetzt worden ist.

3. Bindemittel nach Anspruch 1, dadurch gekennzeichnet, dass als Komponente A ein Polyglycidylester eingesetzt worden ist.

4. Bindemittel nach Anspruch 1–3, dadurch gekennzeichnet, dass als Komponente B ein Diol oder eine Dicarbonsäure mit einer verzweigten aliphatischen Kette eingesetzt worden ist.

5. Bindemittel nach Anspruch 1–4, dadurch gekennzeichnet, dass als Komponente B ein Diol oder eine Dicarbonsäure mit mindestens einer Neostruktur eingesetzt worden ist.

6. Bindemittel nach Anspruch 1–5, dadurch gekennzeichnet, dass als Komponente C eine solche eingesetzt worden ist, deren Molekulargewicht 530–3 000 beträgt.

7. Bindemittel nach Anspruch 1–6, dadurch gekennzeichnet, dass als Komponente C ein linearer Polyester eingesetzt worden ist.

8. Bindemittel nach Anspruch 1–6, dadurch gekennzeichnet, dass als Komponente C ein linearer Polyether eingesetzt worden ist.

9. Bindemittel nach Anspruch 1–6, dadurch gekennzeichnet, dass als Komponente C ein lineares Polyurethan, ein lineares Polyamid oder eine lineare Dicarbonsäure eingesetzt worden ist.

10. Bindemittel nach Anspruch 1–6, dadurch gekennzeichnet, dass als Komponente C ein Polythioether eingesetzt worden ist.

11. Bindemittel nach Anspruch 1–10, dadurch gekennzeichnet, dass der Anteil der Komponente C 10–50 Gew.-%, bezogen auf das gesamte Bindemittel, beträgt.

12. Bindemittel nach Anspruch 1 bis 11, dadurch gekennzeichnet, dass ein Teil seiner Hydroxylgruppen mit einem teilweise blockierten Polyisocyanat umgesetzt worden ist.

13. Verwendung der Bindemittel nach Anspruch 1–12 für Elektrotauchbäder.

14. Verfahren zur Herstellung wasserdispergierbarer Bindemittel für kationische Elektrotauchlacke auf der Basis von Umsetzungsprodukten von modifizierten Epoxidharzen und primären und/oder sekundären Aminen, dadurch gekennzeichnet, dass

(A) niedermolekulare, aromatische Gruppen enthaltende Epoxidharze mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart umgesetzt werden, dass die Umsetzungsprodukte einen Anteil an aromatischen Gruppen, berechnet als Phenylengruppe, von 10 bis 45% enthalten, diese Umsetzungsprodukte mit

(C) gegebenenfalls bis zu 60 Gew.-%, bezogen auf das gesamte Bindemittel, polyfunktionellen Alkoholen, Carbonsäuren und/oder SH-Verbindungen mit einem Molekulargewicht von 300 bis 5 000 weiter umgesetzt werden, wobei die Molverhältnisse von (A), (B) und gegebenenfalls (C) so gewählt werden, dass das resultierende Zwischenprodukt endständige Epoxidgruppen aufweist,

(D) dieses Zwischenprodukt unter Addition einer phenolischen Hydroxylgruppe eines Mono- und/oder Diphenols an die Epoxidgruppen weiter umgesetzt wird, wobei das Mono- oder Diphenol als Substituenten an dem oder den aromatischen Ringen mindestens eine Gruppierung der allgemeinen Formel

$$-CH_2-NH-\overset{\overset{\displaystyle O}{\|}}{C}-CR^1=CHR^2 \qquad (I)$$

trägt, in der $R^1$ und $R^2$ untereinander gleich oder verschieden sind und für Wasserstoff oder eine Methylgruppe stehen, mit der Massgabe, dass zumindest an einen Teil der Gruppierungen der Formel (I) primäre und/oder sekundäre Amine addiert werden, wobei die Aminaddition vor oder nach der Umsetzung der phenolischen Hydroxygruppen mit den Epoxidgruppen durchgeführt werden kann.

15. Verfahren nach Anspruch 14, dadurch gekennzeichnet, dass als Komponente A ein Epoxidharz auf Basis Bisphenol A eingesetzt wird.

16. Verfahren nach Anspruch 14, dadurch gekennzeichnet, dass als Komponente A ein Polyglycidylester eingesetzt wird.

17. Verfahren nach Anspruch 14 bis 16, dadurch gekennzeichnet, dass als Komponente B ein Diol oder eine Dicarbonsäure mit einer verzweigten aliphatischen Kette eingesetzt wird.

18. Verfahren nach Anspruch 14–17, dadurch gekennzeichnet, dass als Komponente B ein Diol oder eine Dicarbonsäure mit mindestens einer Neostruktur eingesetzt wird.

19. Verfahren nach Anspruch 14–18, dadurch gekennzeichnet, dass als Komponente C eine solche eingesetzt wird, deren Molekulargewicht 530 bis 3 000 beträgt.

20. Verfahren nach Anspruch 14–19, dadurch gekennzeichnet, dass als Komponente C ein linearer Polyester eingesetzt wird.

21. Verfahren nach Anspruch 14 bis 19, dadurch gekennzeichnet, dass als Komponente C ein linearer Polyether eingesetzt wird.

22. Verfahren nach Anspruch 14–19, dadurch gekennzeichnet, dass als Komponente C ein lineares Polyurethan, ein lineares Polyamid oder eine linarere Dicarbonsäure eingesetzt wird.

23. Verfahren nach Anspruch 14 bis 19, dadurch gekennzeichnet, dass als Komponente C ein Polythioether eingesetzt wird.

24. Verfahren nach Anspruch 14 bis 23, dadurch gekennzeichnet, dass der Anteil der Komponente C 10 bis 50 Gew.-%, bezogen auf das gesamte Bindemittel, beträgt.

25. Verfahren nach Anspruch 14 bis 24, dadurch gekennzeichnet, dass ein Teil der Hydroxylgruppen des Bindemittels mit einem teilweise blockierten Polyisocyanat umgesetzt wird.

26. Verfahren zum elektrophoretischen Beschichten eines elektrisch leitenden als Kathode geschalteten Substrats aus einem wässrigen Bad auf Basis mindestens teilweise mit Säuren neutralisierter, kationischer, hitzehärtbarer Bindemittel, dadurch gekennzeichnet, dass die Bindemittel hergestellt worden sind durch Umsetzung von

(A) niedermolekularen, aromatische Gruppen enthaltenden Epoxidharzen mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart, dass die Umsetzungsprodukte einen Anteil an aromatischen Gruppen, berechnet als Phenylengruppe, von 10 bis 45% enthalten, und die Umsetzungsprodukte von (A) mit (B) mit

(C) gegebenenfalls bis zu 60 Gew.-%, bezogen auf das gesamte Bindemittel, polyfunktionellen Alkoholen, Carbonsäuren und/oder SH-Verbindungen mit einem Molekulargewicht von 300 bis 5 000 weiterumgesetzt worden sind, wobei die Molverhältnisse von (A), (B) und gegebenenfalls (C) so gewählt worden sind, dass das erhaltene Zwischenprodukt endständige Epoxidgruppen aufweist.

(D) durch weitere Umsetzung des Zwischenproduktes unter Addition einer phenolischen Hydroxylgruppe eines Mono- und/oder Diphenols an die Epoxidgruppen, wobei das Mono- oder Diphenol als Substituenten an dem oder den aromatischen Ringen mindestens eine Gruppierung der allgemeinen Formel

$$-CH_2-NH-\overset{\displaystyle O}{\overset{||}{C}}-CR^1=CHR^2 \qquad (I)$$

trägt, in der $R^1$ und $R^2$ untereinander gleich oder verschieden sind und für Wasserstoff, oder eine Methylgruppe stehen, mit der Massgabe, dass zumindest an einen Teil der Gruppierungen der Formel (I) primäre und/oder sekundäre Amine addiert werden, wobei die Aminaddition vor oder nach der Umsetzung der phenolischen Hydroxylgruppen mit den Epoxidgruppen durchgeführt worden sein kann.

27. Verfahren nach Anspruch 26, dadurch gekennzeichnet, dass als Komponente A ein Epoxidharz auf Basis Bisphenol A eingesetzt worden ist.

28. Verfahren nach Anspruch 26, dadurch gekennzeichnet, dass als Komponente A ein Polyglycidylester eingesetzt worden ist.

29. Verfahren nach Anspruch 26 bis 28, dadurch gekennzeichnet, dass als Komponente B ein Diol oder eine Dicarbonsäure mit einer verzweigten aliphatischen Kette eingesetzt worden ist.

30. Verfahren nach Anspruch 26 bis 29, dadurch gekennzeichnet, dass als Komponente B ein Diol oder eine Dicarbonsäure mit mindestens einer Neostruktur eingesetzt worden ist.

31. Verfahren nach Anspruch 26 bis 30, dadurch gekennzeichnet, dass als Komponente C eine solche eingesetzt worden ist, deren Molekulargewicht 530 bis 3 000 beträgt.

32. Verfahren nach Anspruch 26–31, dadurch gekennzeichnet, dass als Komponente C ein linearer Polyester eingesetzt worden ist.

33. Verfahren nach Anspruch 26–31, dadurch gekennzeichnet, dass als Komponente C ein linearer Polyether angesetzt worden ist.

34. Verfahren nach Anspruch 26 bis 31, dadurch gekennzeichnet, dass als Komponente C ein lineares Polyurethan, ein lineares Polyamid oder eine lineare Dicarbonsäure eingesetzt worden ist.

35. Verfahren nach Anspruch 26 bis 31, dadurch gekennzeichnet, dass als Komponente C ein Polythioether eingesetzt worden ist.

36. Verfahren nach Anspruch 26 bis 35, dadurch gekennzeichnet, dass der Anteil der Komponente C 10 bis 50 Gew.-%, bezogen auf das gesamte Bindemittel, beträgt.

37. Verfahren nach Anspruch 26 bis 36, dadurch gekennzeichnet, dass ein Teil der Hydroxylgruppen des Bindemittels mit einem teilweise blockierten Polyisocyanat umgesetzt worden ist.

## Revendications

1. Liants dispersibles dans l'eau pour peintures d'électrophorèse cationiques à base de produits de réaction de résines d'époxyde modifiées et d'amines primaires et/ou secondaires, qui contiennent éventuellement des agents de réticulation, des pigments, des agents d'étalement et d'autres adjuvants usuels, caractérisés par le fait que, comme produits de réaction, sont contenus des produits qui ont été préparés par réaction:

(A) de résines d'époxyde à base poids moléculaire contenant des groupes aromatiques, ayant un poids équivalent époxyde inférieur à 375, avec

(B) des alcools ou acides carboxyliques polyfonctionneles aliphatiques et/ou alicycliques d'un poids moléculaire inférieur à 350, avec addition sur le groupe époxyde de telle sorte que les produits de réaction contiennent une proportion de groupes aromatiques, calculés en groupe phénylène, de 10 à 45%, et ensuite réaction des produits de réaction A et B sur

(C) éventuellement, jusqu'à 60% en poids relativement à l'ensemble du liant, des alcools, acides

carboxyliques et/ou composés à groupes SH polyfonctionnels d'un poids moléculaire de 300 à 5 000, les rapports molaires de (A), (B) et éventuellement (C) ayant été choisis de façon telle que le produit intermédiaire obtenu présente des groupes époxydes terminaux, et

(D) par conversion supplémentaire du produit intermédiaire avec addition d'un groupe hydroxyle phénolique d'un mono et/ou d'un diphénol sur les groupes époxyde, le mono- ou diphénol portant comme substituant sur le ou les noyaux aromatiques au moins un groupement de la formule générale:

$$-CH_2-NH-\overset{O}{\overset{||}{C}}-CR^1=CHR^2 \qquad (I)$$

dans laquelle $R^1$ et $R^2$ sont semblables entre eux ou différents et représentent l'hydrogène ou un groupe méthyle, étant entendu que, sur au moins une partie des groupements de la formule (I), sont fixées par addition des amines primaires et/ou secondaires, l'addition d'amines ayant pu être effectuée avant ou après la réaction des groupes hydroxyle phénoliques sur les groupes époxyde.

2. Liant selon la revendication 1, caractérisé par le fait que, comme constituant A, a été utilisée une résine d'époxyde à base de bisphénol A.

3. Liant selon la revendication 1, caractérisé en ce que, comme constituant A, a été utilisé un ester de polyglycidyle.

4. Liant selon les revendications 1 à 3, caractérisé par le fait que, comme constituant B, a été utilisé un diol ou un acide dicarboxylique présentant une chaîne aliphatique ramifiée.

5. Liant selon les revendications 1 à 4, caractérisé en ce que, comme constituant B, a été utilisé un diol ou un acide carboxylique présentant au moins une structure néo.

6. Liant selon les revendications 1 à 5, caractérisé par le fait que, comme constituant C, a été utilisé un constituant dont le poids moléculaire est de 530 à 3 000.

7. Liant selon les revendications 1 à 6, caractérisé par le fait que, comme constituant C, a été utilisé un polyester linéaire.

8. Liant selon les revendications 1 à 6, caractérisé par le fait que, comme constituant C, a été utilisé un polyéther linéaire.

9. Liant selon les revendications 1 à 6, caractérisé par le fait que, comme constituant C, a été utilisé un polyuréthane linéaire, une polyamide linéaire ou un acide dicarboxylique linéaire.

10. Liant selon les revendications 1 à 6, caractérisé par le fait que, comme constituant C, a été utilisé un polythioéther.

11. Liant selon les revendications 1 à 10, caractérisé par le fait que la proportion du constituant C est de 10 à 50% en poids relativement à l'ensemble du liant.

12. Liant selon les revendications 1 à 11, caractérisé par le fait qu'une partie de ses groupes hydroxyle à été mise à réagir avec un polyisocyanate partiellement bloqué.

13. Utilisation des liants selon les revendications 1 à 12 pour des bains d'électrophorèse.

14. Procédé de préparation de liants dispersibles dans l'eau pour peintures d'électrophorèse cationiques à base de produits de réaction de résines d'époxyde modifiées et d'amines primaires et/ou secondaires, caractérisé par le fait que l'on fait réagir:

(A) des résines d'époxyde à bas poids moléculaire contenant des groupes aromatiques, ayant un poids équivalent époxyde inférieur à 375, avec

(B) des alcools ou acides carboxyliques polyfonctionnels aliphatiques et/ou alicycliques d'un poids moléculaire inférieur à 350, avec addition sur le groupe époxyde, de telle sorte que les produits de réaction contiennent une proportion de groupes aromatiques, calculés en groupe phénylène, de 10 à 45%, que l'on fait ensuite réagir ces produits de réaction sur:

(C) éventuellement, jusqu'à 60% en poids, relativement à l'ensemble du liant, d'alcools, acides carboxyliques et/ou composés à groupes SH polyfonctionnels d'un poids moléculaire de 300 à 5 000, les rapports molaires de (A), (B) et éventuellement (C) étant choisis de façon telle que le produit intermédiaire obtenu présente des groupes époxyde terminaux,

(D) que l'on convertit en outre ce produit intermédiaire avec addition d'un groupe hydroxyle phénolique d'un mono- et/ou diphénol sur les groupes époxyde, le mono- ou diphénol portant comme substituant sur le ou les noyaux aromatiques au moins un groupement de la formule générale:

$$-CH_2-NH-\overset{O}{\overset{||}{C}}-CR^1=CHR^2 \qquad (I)$$

dans laquelle $R^1$ et $R^2$ sont semblables entre eux ou différents et représentent l'hydrogène ou un groupe méthyle, étant entendu que, sur au moins une partie des groupements de la formule (I), sont fixées par addition des amines primaires et/ou secondaires, l'addition d'amine pouvant s'effectuer avant ou aprés la réaction des groupes hydroxyle phénoliques sur les groupes époxyde.

15. Procédé selon la revendication 14, caractérisé par le fait que comme constituant A, ou utilise une résine d'époxyde à base de bisphénol A.

16. Procédé selon la revendication 14, caractérisé par le fait que, comme constituant A, on utilise un ester de polyglycidyle.

17. Procédé selon les revendications 14 à 16, caractérisé par le fait que, comme constituant B, on utilise un diol ou un acide dicarboxylique présentant une chaîne aliphatique ramifiée.

18. Procédé selon les revendications 14 à 17, caractérisé par le fait que, comme constituant B, on utilise un diol ou un acide dicarboxylique présentant au moins une structure néo.

19. Procédé selon les revendications 14 à 18, caractérisé par le fait que, comme constituant C,

on utilise un constituant dont le poids moléculaire est de 530 à 3 000.

20. Procédé selon les revendications 14 à 19, caractérisé par le fait que, comme constituant C, on utilise un polyester linéaire.

21. Procédé selon les revendications 14 à 19, caractérisé par le fait que, comme constituant C, on utilise un polyéther linéaire.

22. Procédé selon les revendications 14 à 19, caractérisé par le fait que, comme constituant C, on utilise un polyuréthane linéaire, une polyamide linéaire ou un acide dicarboxylique linéaire.

23. Procédé selon les revendications 14 à 19, caractérisé par le fait que, comme constituant C, on utilise un polythioéther.

24. Procédé selon les revendications 14 à 23, caractérisé par le fait que la proportion du constituant C est de 10 à 50% en poids relativement à l'ensemble du liant.

25. Procédé selon les revendications 14 à 24, caractérisé par le fait que l'on fait réagir une partie des groupes hydroxyle du liant sur un polyisocyanate partiellement bloqué.

26. Procédé de revêtement électrophorétique d'un subjectile conducteur de l'électricité branché comme cathode, en partant d'un bain aqueux à base de liants thermodurcissables cationiques au moins partiellement neutralisés par des acides, caractérisé par le fait que les liants ont été préparés par réaction:

(A) de résines d'époxyde à base poids moléculaire contenant des groupes aromatiques, ayant un poids équivalent époxyde inférieur à 375, avec

(B) des alcools ou acides carboxyliques polyfonctionnels aliphatiques et/ou alicycliques d'un poids moléculaire inférieur à 350, avec addition sur le groupe époxyde de telle sorte que les produits de réaction contiennent une proportion de groupes aromatiques, calculés en groupe phénylène, de 10 à 45%, et ensuite réaction des produits de réaction de A et B sur

(C) éventuellement, jusqu'à 60% en poids relativement à l'ensemble du liant, des alcools, acides carboxyliques et/ou composés à groupes SH polyfonctionnels d'un poids moléculaire de 300 à 5 000, les rapports molaires de (A), (B) et éventuellement (C) ayant été choisis de façon telle que le produit intermédiaire obtenu présente des groupes époxydes terminaux, et

(D) par conversion supplémentaire du produit intermédiaire avec addition d'un groupe hydroxyle phénolique d'un mono- et/ou d'un diphénol sur les groupes époxyde, le mono- ou diphénol portant comme substituant sur le ou les noyaux aromatiques au moins un groupement de la formule générale:

$$CH_2-NH-\overset{\overset{\displaystyle O}{||}}{C}-CR^1=CHR^2 \qquad (I)$$

dans laquelle $R^1$ et $R^2$ sont semblables entre eux ou différents et représentent l'hydrogène ou un groupe méthyle, étant entendu que, sur au moins une partie des groupements de la formule (I), sont fixées par addition des amines primaires et/ou secondaires, l'addition d'amines ayant pu être effectuée avant ou après la réaction des groupes hydroxyles phénoliques sur les groupes époxyde.

27. Procédé selon la revendication 26, caractérisé par le fait que, comme constituant A, a été utilisé une résine d'époxyde à base de bisphénol A.

28. Procédé selon la revendication 26, caractérisé par le fait que, comme constituant A, a été utilisé un ester de polyglycidyle.

29. Procédé selon les revendications 26 à 28, caractérisé par le fait que, comme constituant B, a été utilisé un diol ou un acide dicarboxylique présentant une chaîne aliphatique ramifiée.

30. Procédé selon les revendications 26 à 29, caractérisé par le fait que, comme constituant B, a été utilisé un diol ou un acide carboxylique présentant au moins une structure néo.

31. Procédé selon les revendications 26 à 30, caractérisé par le fait que, comme constituant C, a été utilisé un constituant dont le poids moléculaire est de 530 à 3 000.

32. Procédé selon les revendications 26 à 31, caractérisé par le fait que, comme constituant C, a été utilisé un polyester linéaire.

33. Procédé selon les revendications 26 à 31, caractérisé par le fait que, comme constituant C, a été utilisé un polyéther linéaire.

34. Procédé selon les revendications 26 à 31, caractérisé par le fait que, comme constituant C, a été utilisé un polyuréthane linéaire, une polyamine linéaire ou un acide dicarboxylique linéaire.

35. Procédé selon les revendications 26 à 31, caractérisé par le fait que, comme constituant C, a été utilisé un polythioéther.

36. Procédé selon les revendications 26 à 35, caractérisé par le fait que la proportion du constituant C est de 10 à 50% en poids relativement à l'ensemble du liant.

37. Procédé selon les revendications 26 à 36, caractérisé par le fait qu'une partie des groupes hydroxyle du liant a été mis à réagir avec un polyisocyanate partiellement bloqué.

## Claims

1. A water-dispersible binder which is intended for cationic electropaints and is based on reaction products which are formed from modified epoxy resins with primary and/or secondary amines and which can, if desired, also contain crosslinking agents, pigments, flow-control agents and other customary auxiliaries, which contains as reaction products those which have been prepared by reacting

(A) low molecular weight epoxy resins which contain aromatic groups and have an epoxide equivalent weight of less than 375 with

(B) aliphatic and/or alicyclic polyfunctional alcohols or carboxylic acids having a molecular weight of less than 350 by addition to the epoxy group in such a way that the reaction products contain 10–45% of aromatic groups, calculated as phenylene group, and reacting the reaction products of A and B with

(C) if desired up to 60% by weight, relative to total binder of polyfunctional alcohols, carboxylic acids and/or SH compounds having a molecular weight of 300–5,000, the molar ratios of (A), (B) and, if desired, (C) being chosen in such a way that the resulting intermediate products has terminal epoxy groups,

(D) by reacting the intermediate product by the addition of a phenolic hydroxyl group of a monophenol and/or diphenol to the epoxy groups, the monophenol or diphenol having as a substituent on the aromatic ring(s) at least one grouping of the formula

$$-CH_2-NH-\overset{O}{\overset{\|}{C}}-CR^1=CHR^2 \qquad (I)$$

in which $R^1$ and $R^2$ are identical to or different from one another and represent hydrogen or a methyl group, with the proviso that primary and/or secondary amines have been added, before or after the reaction of the phenolic hydroxyl groups with the epoxy groups, to at least some of the grouping of the fomrula (I).

2. A binder as claimed in claim 1, in which an epoxy resin based on bisphenol A has been used as component A.

3. A binder as claimed in claim 1, in which a polyglycidyl ester has been used as component A.

4. A binder as claimed in claims 1–3, in which a diol or a dicarboxylic acid having a branched aliphatic chain has been used as component B.

5. A binder as claimed in claims 1–4, in which a diol or a dicarboxylic acid having at least one neo structure has been used as component B.

6. A binder as claimed in claims 1–5, in which component C had a molecular weight between 530 and 3,000.

7. A binder as claimed in claims 1–6, in which a linear polyester has been used as component C.

8. A binder as claimed in claims 1–6, in which a linear polyether has been used as component C.

9. A binder as claims 1–6, in which a linear polyurethane, a linear polyamide or a linear dicarboxylic acid has been used as component C.

10. A binder as claimed in claims 1–6, in which a polythioether has been used as component C.

11. A binder as claimed in claims 1–10, in which the component C content is 10–50% by weight, relative to the total binder.

12. A binder as claimed in claims 1 to 11, in which some of its hydroxyl groups have been reacted with a partially blocked polyisocyanate.

13. The use of a binder as claimed in claims 1–12, for electrocoating baths.

14. A process for preparing a water-dispersible binder which is intended for cationic electropaints and is based on reaction products which are formed from modified epoxy resins and primary and/or secondary amines, which comprises reacting

(A) low molecular weight epoxy resins which contain aromatic groups and have an epoxide equivalent weight of less than 375 with

(B) aliphatic and/or alicyclic polyfunctional alcohols or carboxylic acids having a molecular weight of less than 350 by addition to the epoxy group in such a way that the reaction products contain 10–45% of aromatic groups, calculated as phenylene group, and reacting the reaction products of A and B with

(C) if desired up to 60% by weight, relative to total binder, of polyfunctional alcohols, carboxylic acids and/or SH compounds having a molecular weight of 300–5,000, the molar ratios of (A), (B) and, if desired, (C) being chosen in such a way that the resulting intermediate products has terminal epoxy groups,

(D) by reacting the intermediate product by the addition of a phenolic hydroxyl group of a monophenol and/or diphenol to the epoxy groups, the monophenol or diphenol having as a substituent on the aromatic ring(s) at least one grouping of the formula

$$-CH_2-NH-\overset{O}{\overset{\|}{C}}-CR^1=CHR^2 \qquad (I)$$

in which $R^1$ and $R^2$ are identical to or different from one another and represent hydrogen or a methyl group, with the proviso that primary and/or secondary amines have been added, before or after the reaction of the phenolic hydroxyl groups with the epoxy groups, to at least some of the groupings of the formula (I).

15. The process as claimed in claim 14, wherein an epoxy resin based on bisphenol A is used as component A.

16. The process as claimed in claim 14, wherein a polyglycidyl ester is used as component A.

17. The process as claimed in claims 14 to 16, wherein a diol or a dicarboxylic acid having a branched aliphatic chain is used as component B.

18. The process as claimed in claims 14–17, wherein a diol or a dicarboxylic acid having at least one neo structure is used as component B.

19. The process as claimed in claims 14–18, wherein component C has a molecular weight between 530 and 3,000.

20. The process as claimed in claims 14–19, wherein a linear polyester is used as component C.

21. The process as claimed in claims 14 to 19, wherein a linear polyether is used as component C.

22. The process as claimed in claims 14–19, wherein a linear polyurethane, a linear polyamide or a linear dicarboxylic acid is used as component C.

23. The process as claimed in claims 14 to 19, wherein a polythioether is used as component C.

24. The process as claimed in claims 14 to 23, wherein the component C content is 10 to 50% by weight, relative to the total binder.

25. The process as claimed in claims 14 to 24, wherein some of the hydroxyl groups of the binder are reacted with a partially blocked polyisocyanate.

26. A process for the electrophoretic coating of an electrically conductive substrate which is connected as the cathode, from an aqueous bath based on cationic heat-curable binders at least partially neutralized with acids, wherein the binders have been prepared by reacting

(A) low molecular weight epoxy resins which contain aromatic groups and have an epoxide equivalent weight of less than 375 with

(B) aliphatic and/or alicyclic polyfunctional alcohols or carboxylic acids having a molecular weight of less than 350 by addition to the epoxy group in such a way that the reaction products contain 10–45% of aromatic groups, calculated as phenylene group, and reacting the reaction products of A and B with

(C) if desired up to 60% by weight, relative to total binder, of polyfunctional alcohols, carboxylic acids and/or SH compounds having a molecular weight of 300–5,000, the molar ratios of (A), (B) and, if desired, (C) being chosen in such a way that the resulting intermediate product has terminal epoxy groups,

(D) by reacting the intermediate product by the addition of a phenolic hydroxyl group of a monophenol and/or diphenol to the epoxy groups, the monophenol or diphenol having as a substituent on the aromatic ring(s) at least one grouping of the formula

$$-CH_2-NH-\overset{\overset{\large O}{||}}{C}-CR^1=CHR^2 \qquad (I)$$

in which $R^1$ and $R^2$ are identical to or different from one another and represent hydrogen or a methyl group, with the proviso that primary and/or secondary amines have been added, before or after the reaction of the phenolic hydroxyl groups with the epoxy groups, to at least some of the groupings of the formula (I).

27. The process as claimed in claim 26, wherein an epoxy resin based on bisphenol A has been used as component A.

28. The process as claimed in claim 26, wherein a polyglycidyl ester has been used as component A.

29. The process as claimed in claims 26 to 28, wherein a diol or a dicarboxylic acid having a branched aliphatic chain has been used as component B.

30. The process as claimed in claims 26 to 29, wherein a diol or a dicarboxylic acid having at least one neo structure has been used as component B.

31. The process as claimed in claims 26 to 30, wherein component C has a molecular weight between 530 and 3,000.

32. The process as claimed in claims 26–31, wherein a linear polyester has been used as component C.

33. The process as claimed in claims 26–31, wherein a linear polyether has been used as component C.

34. The process as claimed in claims 26 to 31, wherein a linear polyurethane, a linear polyamide or a linear dicarboxylic acid has been used as component C.

35. The process as claimed in claims 26 to 31, wherein a polythioether has been used as component C.

36. The process as claimed in claims 26 to 33, wherein the component C content is 10 to 50% by weight, relative to the total binder.

37. The process as claimed in claims 26 to 36, wherein some of the hydroxyl groups of the binder have been reacted with a partially blocked polyisocyanate.